Europäisches Patentamt

European Patent Office

Office européen des brevets

(11) Numéro de publication: **0 188 391**
**B1**

(12) **FASCICULE DE BREVET EUROPEEN**

(45) Date de publication du fascicule du brevet: **20.06.90**

(21) Numéro de dépôt: **86400003.9**

(22) Date de dépôt: **03.01.86**

(51) Int. Cl.⁵: **E 06 B 3/56,** B 60 R 13/06

(54) **Garniture adhésive d'assemblage d'un vitrage à un cadre de fenêtre.**

(30) Priorité: **05.01.85 DE 3500205**

(43) Date de publication de la demande:
**23.07.86 Bulletin 86/30**

(45) Mention de la délivrance du brevet:
**20.06.90 Bulletin 90/25**

(84) Etats contractants désignés:
**BE DE FR GB IT SE**

(56) Documents cités:
**EP-A-0 121 480**
**GB-A-1 203 881**
**US-A-3 331 131**

(73) Titulaire: **SAINT-GOBAIN VITRAGE
INTERNATIONAL
18, avenue d'Alsace
F-92400 Courbevoie (FR)**
㊶ **BE FR GB IT SE**

(73) Titulaire: **VEGLA VEREINIGTE GLASWERKE
Viktoriaallee 3-5
D-5100 Aachen (DE)**
㊶ **DE**

(72) Inventeur: **Kunert, Heinz
Am Krieler Dom 23
D-5000 Köln 41 (DE)**
Inventeur: **Vanaschen, Luc
Lothringer Weg 4
Fupen (BE)**
Inventeur: **Cornils, Gerd
Dachant-Fabri-Strasse 48
D-5161 Narzenich-Girbelsrath (DE)**

(74) Mandataire: **Muller, René et al
SAINT-GOBAIN RECHERCHE 39, quai Lucien
Lefranc
F-93304 Aubervilliers (FR)**

Courier Press, Leamington Spa, England.

EP 0 188 391 B1

**Description**

La présente invention concerne la réalisation d'une garniture adhésive destinée à assembler la zone marginale d'un vitrage et un cadre de fenêtre et a trait en particulier à une garniture adhésive pour la mise en place de vitrages d'automobiles dans le cadre de fenêtre d'une carrosserie d'automobile. L'invention concerne en outre, un vitrage équipé d'une telle garniture ainsi que des dispositifs pour produire les garnitures conformes à l'invention et, de plus, un procédé pour dégager des vitrages montés à l'aide de telles garnitures de leur cadre de fenêtre.

Le montage de vitrages dans une baie de fenêtre s'effectue aujourd'hui de plus en plus par collage direct, c'est-à-dire que les vitrages ne sont plus enchâssés des deux côtés, mais sont simplement collés d'un côté au cadre de fenêtre à l'aide d'un cordon d'adhésif. Cette technique s'utilise particulièrement lors du montage de vitrages d'automobiles dans les carrosseries. A cet effet, il est connu et courant de dissimuler à la vue le cordon d'adhésif de l'avant par un revêtement opaque. Un tel revêtement est décrit, par exemple, dans la demande de brevet allemand publiée DE—A—20 38 016.

Le montage de vitrages dans un cadre de fenêtre peut s'obtenir aussi, comme le décrit le document GB—A—1 203 881, au moyen d'un cordon d'adhésif muni d'un tube flexible servant à l'introduction d'un fluide chaud pour ramollir et duroir la matière adhésive obtenant ainsi son adhérence sur le vitrage et sur le cadre de la fenêtre et la fixation du vitrage dans le cadre. Ce brevet ne concerne pas le démontage du vitrage.

Si, à un moment ultérieur, un tel vitrage d'automobile collé doit être remplacé, des difficultés surgissent lors du démontage du vitrage. Le cordon d'adhésif qui, dans ce cas, doit être sectionné, est en effet difficilement accessible. Avec les outils spéciaux à cet effet, on abime facilement la garniture ou la couche de peinture entourant la baie de fenêtre. Etant donné que le cordon d'adhésif, après la prise et le durcissement, a une consistance très tenance, et en raison du manque de place, le sectionnement du cordon d'adhésif à l'intérieur du repli du cadre de fenêtre constitue une opération délicate.

Il est connu, pour démonter par sectionnement un vitrage d'automobile collé en place, d'utiliser comme outil de découpe un brin de fil qui, en un endroit, est enfoncé transversalement à travers le cordon d'adhésif, puis est tiré perpendiculairement à la zone marginale du vitrage à travers le cordon d'adhésif.

Il est également connu de placer, dans le cordon d'adhésif ou à son voisinage immédiat et parallèlement à celui-ci, un fil flexible à haute résistance à la traction qui, en cas de nécessité, sert directement d'outil de découpe.

Pour sectionner le cordon d'adhésif à l'aide d'un fil sectionneur, il faut exercer des forces considérables car le fil sectionneur est un outil de découpe avec un faible tranchant et le cordon d'adhésif doit être sectionné sur la totalité de son épaisseur.

L'invention a pour but de réaliser une garniture adhésive destinée à assembler un vitrage et un cadre de fenêtre d'une manière telle que le démontage du vitrage soit facilité et en particulier puisse s'effectuer moyennant une dépense d'énergie faible à l'aide d'outils de découpe adéquats, sans que l'on risque d'abimer le cadre de fenêtre.

La garniture adhésive selon l'invention à base d'un cordon d'adhésif pour l'assemblage de la zone marginale d'un vitrage et un cadre de fenêtre, en particulier un vitrage d'automobile et le rebord de fixation de la baie de fenêtre d'une carrosserie d'automobile, et pour le démontage du vitrage, est caractérisé en ce que le cordon adhésif est en une matière à élasticité permanente et comprend un creux fermé, continu, formé directement par des surfaces de délimitations internes de la matière adhésive constituant le cordon d'adhésif.

Un procédé, selon l'invention, pour démonter un vitrage monté par collage dans un cadre de fenêtre à l'aide d'une garniture adhésive, est caractérisé en ce qu'on remplit le creux d'un matériau fluide maintenu sous pression, de sorte que le cordon d'adhésif se déforme sous l'effet des forces agissant dans le creux par la pression et le vitrage est refoulé hors du cadre de fenêtre et on sectionne le cordon d'adhésif à l'aide d'un outil de découpe.

Il n'est pas nécessaire que ce creux fermé vu en coupe forme un tour complet autour du vitrage dans le sens longitudinal du cordon d'adhésif. Il peut, par exemple, être interrompu au niveau de la fonction du cordon d'adhésif où le début et la fin du cordon d'adhésif se fondent l'un dans l'autre. Le point important est simplement que le creux soit étanche, du telle sorte que le milieu sous pression qui y est introduit ne s'en échappe pas, mais que le pression établie dans le creux dilate le cordon d'adhésif, et la fasse éventuellement éclater. Etant donné qu'en règle générale la matière du cordon d'adhésif est une matière à élasticité permanente présentant un allongement à la rupture élevé, le cordon d'adhésif se laisse dilater dans une mesure considérable par lu pression produite dans le creux, de sorte que le vitrage est ainsi dans son ensemble repoussé hors du cadre de fenêtre dans une mesure telle que l'on peut sans difficulté, à l'aide d'un outil de découpa affûté adéquat, à partir de l'extérieur ou de l'intérieur de la carrosserie, sectionner le cordon d'adhésif dilaté en épaisseur et dès lors rétréci en coupe.

A titre de milieu sous pression, on utilise de préférence du gaz comprimé, comme de l'air, ou un liquide sous pression, comme de l'eau. Si cela s'avère nécessaire ou commode, on peut aussi utiliser comme milieu sous pression un liquide qui se solidifie ou durcit et qui conserve essentiellement sa forme lorsque, au moment de l'ouverture du creux par l'opération de sectionnement, la pression est supprimée.

L'introduction du milieu sous pression s'effectue avantageusement à l'aide d'une canule qui est enfoncée dans le cordon d'adhésif jusque dans le creux.

Le creux dans le cordon d'adhésif peut être réalisé de diverses manières. Ainsi, il est par exemple possible d'extruder le cordon d'adhésif à déposer directement sur le vitrage au moyen d'une buse particulière qui produit un cordon d'adhésif comportant un creux entouré de tous côtés par la matière du cordon d'adhésif. La matière de l'adhésif doit dans ce cas elle-même présenter l'étanchéité requise. Par ailleurs, il est aussi possible d'insérer dans le cordon d'adhésif, directement lors de l'extrusion ou après celui-ci, un tube flexible en une matière élastique. Grâce à la présence d'un tube flexible, il devient possible de disposer le creux en n'importe quel endroit à l'intérieur de la section transversale du cordon d'adhésif.

Dans une forme de réalisation particulièrement avantageuse de l'invention, il est prévu, déjà avant le montage du vitrage dans la carrosserie, et de préférence dès la fin du processus de fabrication du vitrage, d'appliquer le long du bord du vitrage un cordon d'adhésif extrudé avec un creux, si bien que ce cordon d'adhésif sert ultérieurement lors de la mise en place du vitrage, de corps intermédiaire entre le vitrage et une couche d'adhésif appliquée sur le cordon d'adhésif durci. Cette forme de réalisation de l'invention à l'avantage que le cordon d'adhésif déjà appliqué lors du processus de fabrication du vitrage, sert également de protection pour les bords du vitrage et de moyen d'espacement pendant les manipulations et le transport des vitrages.

D'autres formes de réalisation et d'autres avantages de l'invention seront décrits ci-après plus en détail avec référence aux dessins annexés, dans lesquels:

la figure 1 est une vue de coupe, dans la zone de jonction entre le vitrage et le cadre de fenêtre, d'une première forme d'exécution d'une garniture adhésive d'assemblage conforme à l'invention;

la figure 2 illustre la forme d'exécution représentée sur la figure 1 pendant l'opération de démontage du vitrage;

la figure 3 illustre une autre forme d'exécution d'une garniture adhésive conforme à l'invention, également sous la forme d'une coupe prise dans la zone de la jonction entre le vitrage et le cadre de fenêtre;

la figure 4 illustre la forme d'exécution représentée sur la figure 3 pendant l'opération de démontage du vitrage;

la figure 5 illustre une autre forme d'exécution d'une garniture adhésive conforme à l'invention, également sous la forme d'une coupe prise dans la zone de jonction entre le vitrage et le cadre de fenêtre;

la figure 6 est une vue en coupe dans la zone d'extrusion d'une buse convenant pour le dépôt d'un cordon d'adhésif présentant un creux;

la figure 7 est une vue en coupe suivant la ligne VII—VII de la figure 6, et;

la figure 8 est une vue schématique d'un dispositif destiné simultanément à déposer un cordon d'adhésif et un tube flexible noyé dans ce cordon.

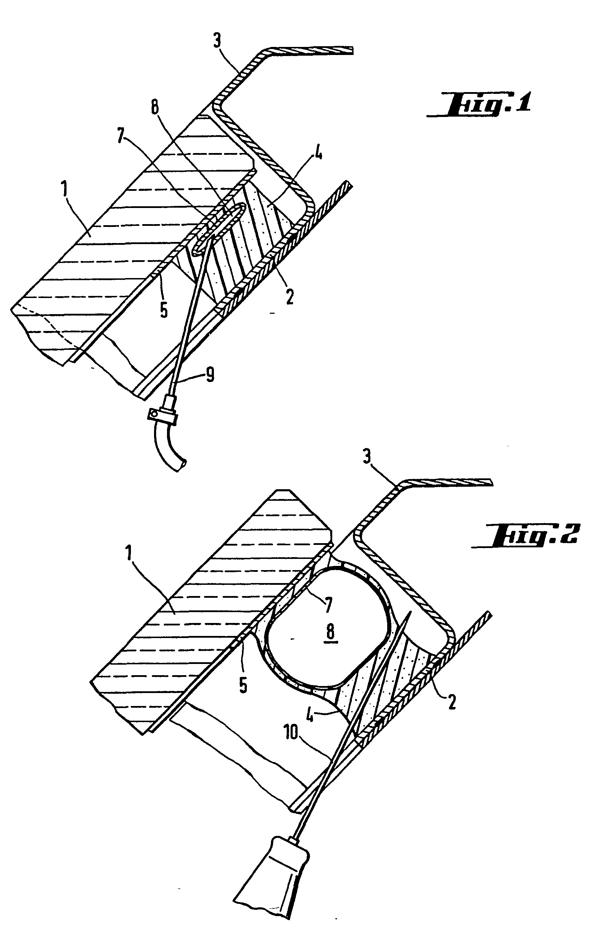

Comme on peut le voir sur la figure 1, le vitrage d'automobile 1, qui peut être, par exemple un vitrage de pare-brise ou de lunette arrière, est collé par l'intermédiaire du cordon d'adhésif 4 au rebord de fixation 2 du cadre de fenêtre 3. Un revêtement en forme d'encadrement 5 en une matière opaque, en particulier une peinture céramique à cuire, est appliqué tout le long du bord du vitrage 1. Une ou plusieurs couches d'agent améloirant l'adhérence peuvent être disposées d'une manière connue entre le cordon d'adhésif 4 et les surfaces du vitrage 1 et du rebord de fixation 2 auxquelles le cordon d'adhésif 4 adhère. A titre de matière adhésive, on peut utiliser en particulier des systèmes de polyuréthane monocomposant durcissant sous l'effet de la vapeur d'eau, décrits par exemple dans le brevet des Etats-Unis d'Amérique n° 3 779 794. Ces matières adhésives sont pâteuses est sont déposées à l'aide de buses d'extrusion adéquates sur la zone marginale du vitrage, comme décrit en détail, par exemple, dans la publication de brevet allemand DE—AS 2 730 831.

A l'intérieur du cordon d'adhésif 4 est disposé un tube flexible 7 en une matière élastiquement ou plastiquement dilatable, en particulier en une matière plastique adéquate. Dans le cas de l'exemple de réalisation représenté au dessin, le tube flexible 7 se trouve dans la zone du cordon d'adhésif 4 proche du vitrage. Le tube flexible 7 présente une section transversale plate, mais il peut aussi présenter une autre section, en particulier une section ronde. Le tube flexible 7 est entouré de tous côtés par une couche de la matière adhésive suffisamment épaisse pour que la résistance mécanique nécessaire et l'étanchéité indispensable de la garniture d'assemblage soient garanties sur tout le poutour.

Quand le vitrage 1 soit être démonté, une canule 9 est enfoncée à travers le cordon d'adhésif 4 jusque dans le tube flexible 7 et, au moyen de cette canule 9 qui est raccordée par un tuyau souple à une conduite d'air comprimé, le creux 8 du tube flexible 7 est mis sous pression. Cette pression provoque, comme le montre la figure 2, une forte dilatation du tube flexible 7 et du cordon d'adhésif 4 qui est également fait d'une matière à élasticité permanente. Cette dilatation, qui présente une composante essentielle dirigée dans un sens perpendiculaire au vitrage 1 a pour conséquence que le vitrage 1 est repoussé hors du repli du cadre de fenêtre 3, de sorte que la section transversale du cordon d'adhésif 4 s'amincit transversalement au sens de la dilatation. Grâce à la distance de cette façon accrue entre le vitrage 1 et le rebord de fixation 2, ainsi qu'à l'amincissement résultant du cordon d'adhésif, il n'est à présent pas difficile, à l'aide d'un outil de découpe 10, de sectionner le cordon d'adhésif 4 à côté du tube fleixble 7 rempli d'air comprimé.

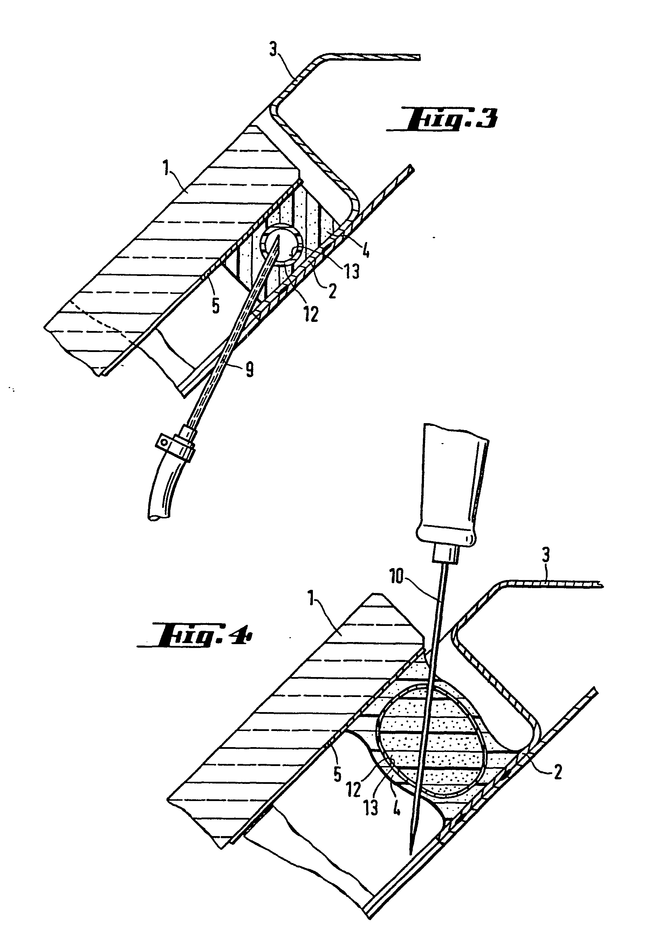

Dans le cas de l'exemple de réalisation représenté sur les figures 3 et 4, on procède de manière analogue. Dans ce cas également, l'assemblage du vitrage 1 au rebord de fixation 2 est établi par un cordon d'adhésif 4 dans lequel est noyé un tube flexible 12 en matière dilatable. Quand le vitrage 1 doit être démonté, le creux 13 du tube flexible 12 est, dans ce cas, rempli à l'aide d'une canule 9, non pas au moyen d'un gaz sous pression, mais au moyen d'un liquide sous pression qui se solidifie après un certain temps. Des liquides convenant à cet effet sont, par exemple, la paraffine dure fondue ou la cire dure fondue ou des systèmes de matière plastique à deux composants qui durcissent. Sous l'effet de la pression du liquide, le tube flexible 12 et le cordon d'adhésif 4 se dilatent à nouveau de sorte que la composante de force agissant perpendiculairement sur le vitrage 1 repousse le vitrage 1 dans son ensemble hors du cadre de fenêtre 3. Lorsque le vitrage 1 est suffisamment sorti du repli du cadre de fenêtre, et telle sorte qu'à l'aide d'un outil de découpe 10, on puisse sectionner le cordon d'adhésif 4 de l'extérieur du véhicule, on attend tout d'abord que le liquide se soit solidifié dans le creux 13 du tube flexible 12. Le cordon d'adhésif 4 est alors sectionné au moyen de l'outil de découpe 10. Dans ce cas, le tube flexible 12 rempli de la matière de remplissage solidifiée peut également être sectionné immédiatement sans inconvénient, car le remplissage solidifié maintient le vitrage 1 à la distance souhaitée.

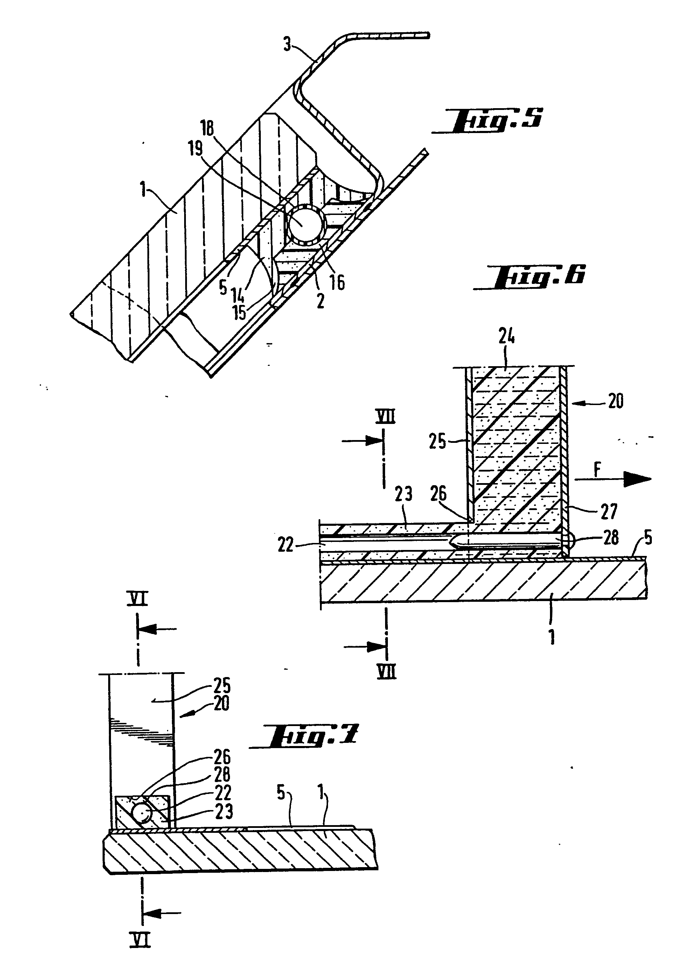

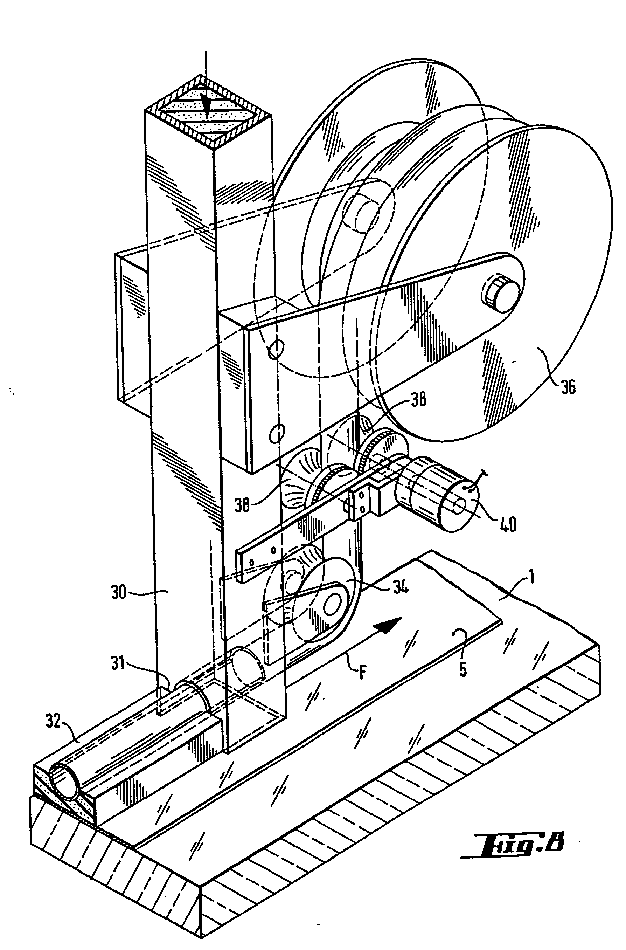

Il est aussi possible de renoncer à l'insertion d'un corps tubulaire souple dans le cordon d'adhésif et à la place d'aménager un creux dans le cordon d'adhésif, par exemple au moyen de buses d'extrusion convenables tels que décrites plus loin avec référence aux figures 6 et 7.

Une forme d'exécution particulièrement avantageuse de l'invention est illustrée sur la figure 5. Dans ce cas, le cordon d'adhésif reliant le vitrage 1 au rebord de fixation 2 est formé de deux cordons partiels 14 et 16. Le cordon partiel 14 est disposé sur le vitrage 1 avec intercalation du revêtement opaque en forme d'encadrement 5. Grâce à deux ailes de délimitation saillantes 15, ce cordon partiel 14 présente une section transversale en forme de U. Ce cordon partiel 14 est posé sur le vitrage 1 au cours d'une opération précédant le collage à la carrosserie et ce avantageusement immédiatement après la fabrication du vitrage 1. Le vitrage 1 est de cette façon prééquipé d'un cordon partiel profilé d'adhésif durci 14, ce qui, lors de l'opération de montage proprement dite dans la carrosserie, entraine divers avantages. Lors de l'opération de montage, le second cordon partiel 16 est inséré, à l'aide d'une buse d'extrusion, dans le canal du cordon partiel profilé 14 formé par les ailes de délimitation 15 et le vitrage 1 est ensuite mis en place de la manière habituelle par collage à l'aide du second cordon 16.

Un tuyau flexible 18 en une matière dilatable est encastré dans le cordon partiel 14. Le maintien de ce tuyau flexible 18 s'effectue avantageusement par le fait qu'une partie de la section transversale du tuyau flexible fait saillie sur la surface du cordon partiel d'adhésif profilé 14, de sorte que le cordon partiel 16 est en contact directement avec cette partie saillante du tuyau flexible 18. Les matières adhésives formant le cordon partiel 14 et le cordon partiel 16 peuvent avantageusement être choisies l'une par rapport à l'autre d'une manière telle que l'adhérence au niveau de l'interface entre ces deux cordons partiels soit plus faible que la cohésion interne de la matière des deux cordons partiels. Une telle adhérence, volontairement plus fiable, peut être obtenue aussi, par exemple, par un traitement chimique ou physique adéquat de la surface du cordon partiel durci 14 avant l'application du cordon partiel 16. L'interface entre les deux cordons partiels 14 et 16 représente de cette façon un endroit affaibli le long duquel, lors du remplissage du creux 19 du tube flexible 18 au moyen d'un milieu sous pression, par exemple au moyen d'air comprimé, une séparation partielle ou complète des deux cordons partiels se produit.

Sur les figures 6 et 7 est représentée la buse 10 d'un dispositif d'extrusion qui convient pour déposer un cordon d'une matière adhésive 24 présentant un creux 22. La buse 20 est tubulaire, et présente, par exemple, une section transversale rectangulaire, elle est posée perpendiculairement sur le vitrage 1 et est déplacée dans le sens de la flèche F sur la zone marginale à revêtir du vitrage. A l'arrière de la buse, la paroi 25 est pourvue d'un orifice calibré 26 par lequel la matière adhésive 24 sort et forme le cordon profilé 23. En face de l'orifice 26 constituant l'orifice de la buse, un mandrin 28, qui s'étend dans l'orifice 26, est fixé à la paroi 27 de manière à former un creux 22 désiré dans le cordon profilé extrudé 23.

Le creux à l'intérieur du cordon d'adhésif peut par ailleurs aussi être utilisé à d'autres fins. Si, par exemple, ou utilise un système d'adhésif durcissant sous l'effet de l'humidité, on peut également à l'aide d'une canule introduire par le creux de l'air saturé de vapeur d'eau, en s'aidant d'une seconde canule pour évacuer l'air présent dans le creux. On peut de cette façon accélérer considérablement l'opération de durcissement de l'adhésif. Ce procédé peut aussi être utilisé lorsque le creux est formé par un tube flexible inséré dans la matière adhésive, mais ce tube doit dans ce cas laisser passer la vapeur d'eau de telle sorte qu'elle puisse diffuser à travers la paroi du tube flexible dans la matière adhésive.

Un dispositif au moyen duquel des vitrages peuvent être pourvus d'un cordon d'adhésif contenant un tube flexible 18 noyé est illustré sur la figure 8. La buse d'extrusion 30, qui est guidée dans le sens de la flèche F sur le vitrage 1, présente en orifice celibré 31 par lequel la matière adhésive sort sous la forme du cordon profilé 32. Du côté de la buse 30 opposé à l'orifice 31, un galet de guidage et de pression 34 est monté à rotation sur la paroi de la buse et présente, dans sa périphérie, une gorge au moyen de laquelle il saisit le tube flexible 18. A l'aide de ce galet 34, le tube flexible 18 est dévié de la direction verticale vers la direction horizontale, est introduit dans la buse 30 et sort de l'orifice calibré 31 de la buse en compagnie du cordon d'adhesif extrudé 32 et noyé dans celui-ci. Le tube flexible 18 est dévidé d'un rouleau d'alimentation 36 monté sur la tête d'extrusion et est amené par l'intermédiaire de la paire de galets de transport 38 au galet de pression 34. Cette paire de galets de tansport 38 est entrainée par le moteur 40 à une vitesse telle que le tube flexible 18 soit amené au gelet de pression 34 à la vitesse à laquelle la buse 30 est déplacé sur le vitrage dans le sens de la flèche F.

Les exemples de réalisation décrits concernent exclusivement le montage de vitrages d'automobile dans le baie de fenêtre d'une carrosserie d'automobile.

L'invention peut cependant aussi être utilisée avec les mêmes avantages pour monter des vitrages dans d'autres véhicules ou dans la construction de bâtiments, c'est-à-dire partout où le montage de vitrages dans un cadre de fenêtre est effectué à l'aide d'une garniture d'assemblage adhésive.

Dans les exemples de réalisation décrits, le cordon d'adhésif constituant la garniture a toujours été posé sur le vitrage. Il va de soi cependant qu'il est aussi possible de poser le cordon d'adhésif sur le rebord de fixation du cadre de fenêtre.

## Revendications

1. Garniture adhésive à base d'un cordon d'adhésif pour l'assemblage de la zone marginale d'un vitrage et un cadre de fenêtre, en particulier un vitrage d'automobile (1) et le rebord de fixation (2) de la baie de fenêtre d'une carrosserie d'automobile, et pour le démontage du vitrage, caractérisé en ce que le cordon adhésif est en une matière à élasticité permanente et comprend un creux fermé, continu, formé directement par des surfaces de délimitations internes de la matière adhésive constituant le cordon d'adhésif.

2. Garniture adhésive suivant la revendication 1, caractérisée en ce que le creux (8, 13, 19) est formé par un tube flexible (7, 12, 18) noyé dans la matière adhésive constitutive du cordon (4, 14) lors de sa formation.

3. Garniture adhésive suivant la revendication 2, caractérisée en ce que le tube flexible (7, 12, 18) est fait d'une matière à pouvoir de dilatation élastique et/ou platique élevé.

4. Garniture adhésive suivant l'une quelconque des revendications 1 à 3, caractérisée en ce qu'elle comprend deux cordons partiels (14, 16) dont le premier (14) est appliqué sur le vitrage (1) au cours d'une phase antérieure au montage du vitrage dans le cadre de fenêtre et dans lequel est disposé un tuble flexible (18) formant le creux (19) et l'autre cordon partiel (16) assure le collage entre le cordon partiel durci (14) et le rebord de fixation (2).

5. Garniture adhésive suivant la revendication 4, caractérisée en ce que l'adhérence des deux cordons partiels (14, 16) au niveau de leurs interfaces est plus faible que la cohésion à l'intérieur de la matière de chaque cordon partiel (14, 16).

6. Garniture adhésive suivant l'une quelconque des revendications 1 à 5, caractérisée en ce que le cordon d'adhésif (4, 14, 16, 23, 32) est à base d'un système de polyuréthane monocomposant durcissant sous l'effet de l'humidité.

7. Garniture adhésive suivant la revendication 6, caractérisée en ce que le tube flexible (7, 12, 18) noyé dans le cordon d'adhésif comprend une matière laissant passer la vapeur d'eau.

8. Garniture adhésive suivant l'une des revendications 6 ou 7, caractérisée en ce que, pour accélérer le durcissement du cordon d'adhésif, après la mise en place du vitrage d'automobile dans le cadre de fenêtre de la carrosserie, de l'air chargé d'humidité est admis dans le creux (8, 13, 19, 22).

9. Procédé pour démonter un vitrage monté par collage dans un cadre de fenêtre à l'aide d'une garniture adhésive suivant l'une quelconque des revendications 1 à 8, caractérisé en ce qu'on remplit le creux (8, 13, 19, 22) d'un matériau fluide maintenu sous pression, de sorte que le cordon d'adhésif se déforme sous l'effet des forces agissant dans le creux par la pression et le vitrage (1) est refoulé hors du cadre de fenêtre (3) et on sectionne le cordon d'adhésif à l'aide d'un outil de découpe.

10. Procédé suivant la revendication 9, caractérisé en ce que on remplit le creux (8) d'air comprimé par introduction d'une canule (9) raccordée à une conduite d'air comprimé.

11. Procédé suivant la revendication 9, caractérisé en ce que on remplit le creux (13) avec un fluide maintenu sous pression.

12. Procédé suivant la revendication 11, caractérisé en ce qu'on utilise pour remplir le creux (13) un liquide qui se fige après remplissage du creux.

13. Vitrage destiné à être monté par collage sur le rebord de fixation d'un cadre de fenêtre, caractérisé en ce qu'il est pourvu le long de sa périphérie d'une garniture adhésive conforme à l'une quelconque des revendications 1 à 8 permettant un démontage facile du vitrage hors du cadre de fenêtre.

## Patentansprüche

1. Klebeverbindung auf der Grundlage eines Kleberstrangs für die Verbindung der Randzone einer Glasscheibe mit einem Fensterrahmen, insbesondere einer Autoglasscheibe (1) mit dem Befestigungsflansch (2) des Fensterrahmens einer Autokarosserie, und für den Ausbau der Glasscheibe, dadurch gekennzeichnet, daß der Kleberstrang aus einem dauerelastischen Material besteht und einen geschlossenen, durchgehenden Hohlraum umfaßt, der unmittelbar von den inneren Begrenzungsflächen des den Kleberstrang bildenden Klebermaterials gebildet wird.

2. Klebeverbindung nach Anspruch 1, dadurch gekennzeichnet, daß der Hohlraum (8, 13, 19) von einem flexiblen Schlauch (7, 12, 18) gebildet wird, der während der Bildung des Kleberstrangs (4, 14) in das Klebermaterial eingebettet wird.

3. Klebeverbindung nach Anspruch 2, dadurch gekennzeichnet, daß der flexible Schlauch (7, 12, 18) aus einem Material mit hoher elastischer und/oder plastischer Dehnfähigkeit besteht.

4. Klebeverbindung nach einem der Ansprüche 1 bid 3, dadurch gekennzeichnet, daß sie zwei Teilstränge (14, 16) umfaßt, von denen der erste Teilstrang (14) im Laufe einer der Montage der Glasscheibe in dem Fensterrahmen voraufgehenden Phase auf der Glasscheibe (1) abgelegt, und in welchem ein den Hohlraum (19) bildender flexibler Schlauch (18) angeordnet wird, und der zweite Teilstrang (16) die Verbindung zwischen dem ausgehärteten Teilstrang (14) und dem Befestigungsflansch (2) sicherstellt.

5. Klebeverbindung nach Anspruch 4, dadurch gekennzeichnet, daß die Haftung der beiden Teilstränge (14, 16) an ihren Grenzflächen geringer ist als die Kohäsion innerhalb des Materials jedes Teilstrangs (14, 16).

6. Klebeverbindung nach einem der Ansprüche 1 bis 5, dadurch gekennzeichnet, daß der Kleberstrang (4, 14, 16, 23, 32) aus einem feuchtigkeitshärtenden Einkomponenten-Polyurethan-System besteht.

7. Klebeverbindung nach Anspruch 6, dadurch gekennzeichnet, daß der in den Kleberstrang eingebettete flexible Schlauch (7, 12, 18) ein wasserdampfdurchlässiges Material umfaßt.

8. Klebeverbindung nach Anspruch 6 oder 7, dadurch gekennzeichnet, daß nach dem Einsetzen der Glasscheibe in den Fensterrahmen der Karosserie zur Beschleunigung des Aushärtevorgangs des Kleberstrangs wasserdampfhaltige Luft in den Hohlraum (8, 13, 19, 22) eingeleitet wird.

9. Verfahren zum Ausbauen einer im Fensterrahmen durch Kleben mit Hilfe einer Klebeverbindung nach einem der Ansprüche 1 bis 8 montierten Glasscheibe, dadurch gekennzeichnet, daß der Hohlraum (8, 13, 19, 22) mit einem unter Druck stehenden fließfähigen Medium gefüllt wird, so daß der Kleberstrang sich unter der Wirkung der durch den Druck in dem Hohlraum wirkenden Kräfte verformt und die Glasscheibe (1) aus dem Fensterrahmen (3) herausgedrückt wird, und daß der Kleberstrang mit Hilfe eines Schneidwerkzeugs durchgetrennt wird.

10. Verfahren nach Anspruch 9, dadurch gekennzeichnet, daß der Hohlraum (8) durch Einführen einer an einer Druckluftleitung angeschlossenen Kanüle (9) mit Druckluft gefüllt wird.

11. Verfahren nach Anspruch 9, dadurch gekennzeichnet, daß der Hohlraum (13) mit einer unter Druck stehenden Flüssigkeit gefüllt wird.

12. Verfahren nach Anspruch 11, dadurch gekennzeichnet, daß zum Füllen des Hohlraums (13) eine Flüssigkeit verwendet wird, die nach dem Füllen des Hohlraums erstarrt.

13. Glasscheibe für den Einbau durch Verkleben mit dem Befestigungsflansch eines Fensterrahmens, dadurch gekennzeichnet, daß sie entlang ihrem Umfang mit einem Kleberstrang entsprechend einem der Ansprüche 1 bis 8 versehen ist, der ein leichtes Ausbauen der Glasscheibe aus dem Fensterrahmen erlaubt.

**Claims**

1. Adhesive filling based upon a cord of adhesive for connecting together the marginal zone of a pane and window frame, especially an automobile pane (1), and the fixing flange (2) of the window opening of an automobile body, and for the removal of the pane, characterized in that the adhesive cord is of a material having permanent elasticity and comprises a closed cavity, continuous and formed directly by internal boundary surfaces of the adhesive material constituting the cord of adhesive.

2. Adhesive filling according to Claim 1, characterized in that the cavity (8, 13, 19) is formed by a flexible tube (7, 12, 18), embedded in the adhesive material constituting the cord (4, 14) during its formation.

3. Adhesive filling according to Claim 2, characterized in that the flexible tube (7, 12, 18) is made of a material having a high capability for elastic and/or plastic expansion.

4. Adhesive filling according to any one of Claims 1 to 3, characterized in that it comprises two partial cords (14, 16), the first (14) of which is applied onto the pane (1) during a phase prior to the mounting of the pane in the window frame and in which ther is disposed a flexible tube (18) forming the cavity (19), and the other partial cord (16) assures the bonding between the hardened partial cord (14) and the fixing flange (2).

5. Adhesive filling according to Claim 4, characterized in that the adhesion of the two partial cords (14, 16) at their interfaces is weaker than the cohesion inside the material of each partial cord (14, 16).

6. Adhesive filling according to any one of Claims 1 to 5, characterized in that the cord of adhesive (4, 14, 16, 23, 32) is based upon a single-component polyurethane system which hardens under the effect of humidity.

7. Adhesive filling according to Claim 6, characterized in that the flexibe tube (7, 12, 18) embedded in the cord of adhesive comprises a material permitting the passage of water vapour.

8. Adhesive filling according to one of Claims 6 or 7, characterized in that, for accelerating the hardening of the cord of adhesive, after the automobile pane has been placed in the window frame of the vehicle body, air charged with humidity is admitted into the cavity (8, 13, 19, 22).

9. Method of removing a pane mounted by bonding in a window frame by means of an adhesive filling according to any one of Claims 1 to 8, characterized in that the cavity (8, 13, 19, 22) is filled with a fluid material maintained under pressure, so that the cord of adhesive deforms under the effect of the forces acting in the cavity by the pressure and the pane (1) is pushed out of the window frame (3) and the adhesive cord is cut by means of a cutting tool.

10. Method according to Claim 9, characterized in that the cavity (8) is filled with compressed air by the introduction of a nozzle (9) connected to a compressed air pipe.

11. Method according to Claim 9, characterized in that the cavity (13) is filled with a fluid maintained under pressure.

12. Method according to Claim 11, characterized in that a liquid which sets after filling the cavity is used for filling the cavity (13).

13. Pane intended to be mounted by bonding onto the fixing flange of a window frame, characterized in that it is provided, along its periphery, with an adhesive filling according to any one of Claims 1 to 8, permitting easy removal of the pane from its window frame.

Fig.1

Fig.2

1

_Fig.3_

_Fig.4_

Fig.5

Fig.6

Fig.7

Fig.8